# EUROPEAN PATENT SPECIFICATION

(11) **EP 3 694 363 B1**
(45) Date of publication and mention of the grant of the patent: **27.04.2022**
(21) Application number: 18803472.2
(22) Date of filing: 12.10.2018
(51) Int. Cl.: A43B 5/04, B29D 35/00, B29D 99/00, B29D 35/04, B29D 35/14, A43B 5/14, A43B 5/16, A43B 13/02, B29C 70/00, B32B 37/10

(54) **PRODUCTION METHOD OF A COMPONENT OF A FOOTWEAR AND FOOTWEAR PROVIDED WITH SAID COMPONENT**
VERFAHREN ZUR HERSTELLUNG EINER KOMPONENTE EINER SCHUHWARE UND SCHUHWARE MIT DIESER KOMPONENTE
PROCÉDÉ DE PRODUCTION D'UN COMPOSANT DE CHAUSSURE ET CHAUSSURE ÉQUIPÉ DE CE COMPOSANT

(30) Priority: 12.10.2017 IT 201700115146; 17.01.2018 IT 201800001171
(43) Date of publication of application: 19.08.2020
(73) Proprietor: Stilo S.r.l., 20122 Milano (IT); Calzaturificio S.C.A.R.P.A. S.p.A., 31011 Asolo (TV) (IT)
(72) Inventor: MERELLI, Dino, 24020 Onore (BG) (IT); PARISOTTO, Davide, 31010 Casella D asolo (TV) (IT)
(74) Representative: Bellemo, Matteo
(86) International application number: PCT/IB2018/057932
(87) International publication number: WO 2019/073450

(56) References cited:
- EP-A2- 2 649 896
- US-A- 5 832 634
- US-A1- 2015 290 892

## Description

### TECHNICAL FIELD

The present invention relates to a production method of a component of a footwear and to a footwear provided with said component.

More in detail, the present invention relates to a production method of a composite-material component for a sports footwear, such as e.g. a cycling shoe. Footwear to which the following disclosure will make explicit reference without however losing its general character.

### BACKGROUND ART

As already known, the most recent cycling shoes are basically made up of an upper, made of leather or other soft, flexible and transpiring material, which is shaped so as to enclose and cover the foot of the wearer; of a rigid and plate-like sole, which is fixed to the lower part of the upper by stitching and/or gluing to cover the foot sole; and of a coupling plate, traditionally called a "cleat", which is firmly fastened to the lower face of the sole, roughly at the metatarsal-phalangeal area of the foot sole, and is specifically structured to be coupled in a rigid and stable, though easily detachable manner to a special "quick coupling binding device", in turn arranged on the pedal of the bicycle.

In the most sophisticated cycling shoes, moreover, the sole is made of composite material so as to be extremely rigid and light.

More specifically, the sole is currently formed by one or more overlapping layers of carbon fibres, suitably intertwined and embedded in an epoxy-based solid polymer matrix.

Unfortunately, in spite of being much lighter than the traditional cycling shoes having a sole made of thermoplastic material, cycling shoes with a sole made of composite material are unpopular with some users because they do not adequately protect the perimeter edge of the foot and, due to their very high structural rigidity, because they do not adapt to the morphology of the foot of the user, with all the comfort problems that this entails.

US5832634 A discloses a sports footwear with a sole unit comprising at least one composite material layer partly involving the sole unit itself.

### DISCLOSURE OF INVENTION

Aim of the present invention is to provide a composite-material sole that can overcome the aforementioned drawbacks and which is also economical to manufacture.

In compliance with these aims, according to the present invention there is provided a production method of a composite-material component for footwear as defined in claim 1 and preferably, though not necessarily, in any one of the claims dependent upon it.

According to the present invention there is furthermore provided a footwear as defined in claim 12.

According to the present invention, an insole is finally made as defined in claim 13.

### BRIEF DESCRIPTION OF THE DRAWINGS

The present invention will now be described with reference to the accompanying drawings showing an example of non-limiting embodiment, in which:
- Figure 1 is a perspective view of a cycling shoe made according to the teachings of the present invention, with parts removed for clarity's sake;
- Figure 2 is a partially exploded view of the cycling shoe shown in Figure 1, with parts removed for clarity's sake;
- Figure 3 is a side view of the sole of the cycling shoe shown in Figure 1, roughly sectioned along the midplane;
- Figures 4 to 9 schematically show some steps of the production method of the sole shown in Figure 3;
- Figure 10 is a perspective view of a running shoe made according to the teachings of the present invention, with parts removed for clarity's sake;
- Figure 11 is a riding boot made according to the teachings of the present invention, with parts removed for clarity's sake;
- Figure 12 is a motorcycle boot made according to the teachings of the present invention, with parts removed for clarity's sake; and finally
- Figure 13 is an ice skate made according to the teachings of the present invention, with parts removed for clarity's sake;
- Figure 14 is a cross-country ski shoe made according to the teachings of the present invention, with parts removed for clarity's sake; and finally
- Figure 15 is an insole made according to the teachings of the present invention, with parts in section and parts removed for clarity's sake.

### BEST MODE FOR CARRYING OUT THE INVENTION

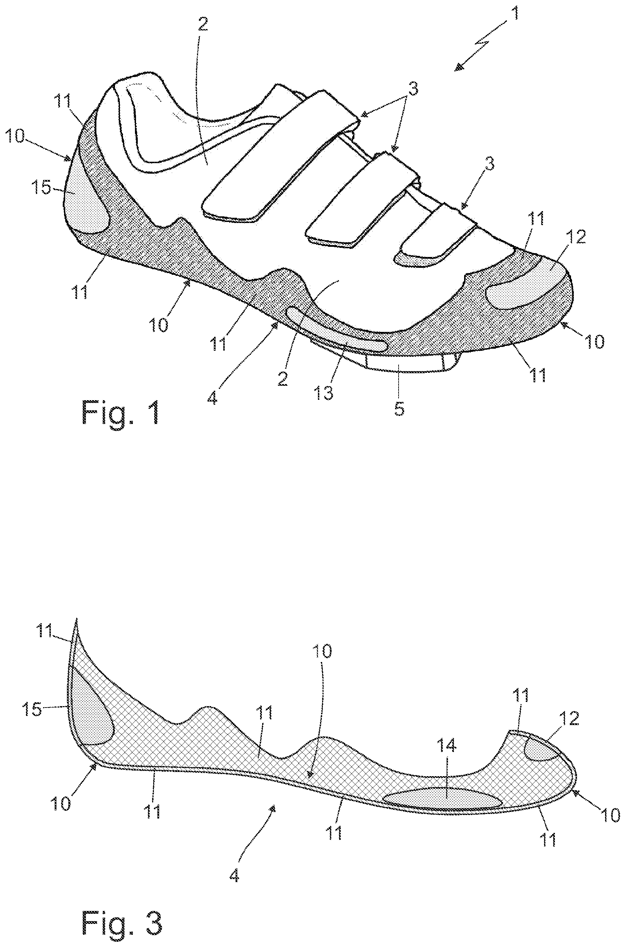

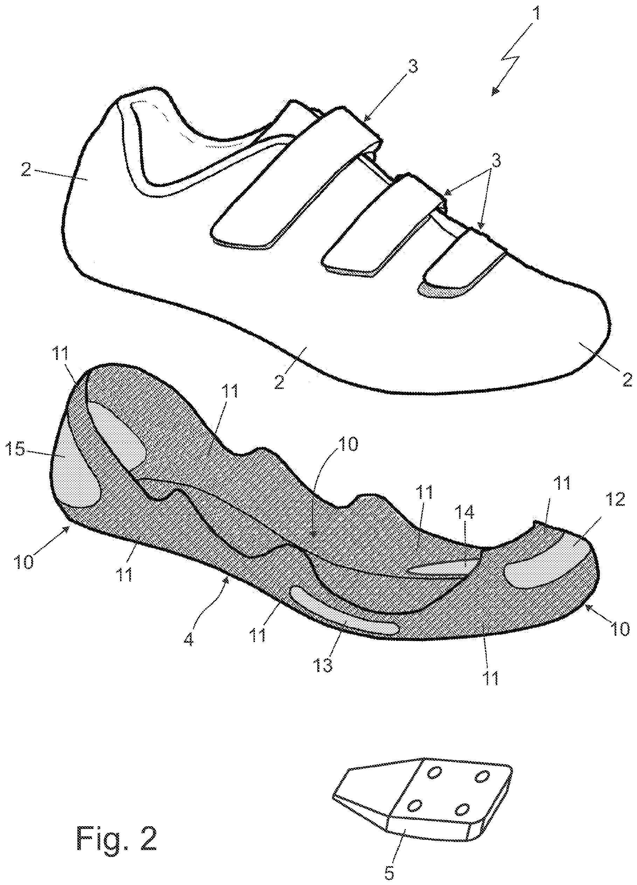

With reference to Figures 1, 2 and 3, number 1 denotes as a whole a cycling shoe that basically comprises: an upper 2 made of leather, fabric or other soft flexible and optionally also breathable material, which is shaped so as to accommodate and cover the foot of the user, preferably roughly up to the height of the ankle, and is preferably provided with Velcro straps 3 or other manually operated closing means; a lower sole 4, which is stably fixed to the lower part of upper 2, preferably by sewing and/or gluing, to cover the foot sole; and optionally also a coupling plate 5, traditionally called "cleat", which is fixed to the lower face of sole 4 in a rigid and preferably also manually adjustable manner, roughly at the metatarsal-phalangeal area of the foot sole, and is specifically structured to couple/uncouple in a rigid and stable, though easily detachable manner, to a special quick coupling binding device of a known type (not shown), which in turn is integral with the pedal of the bicycle.

Coupling plate 5 is a component already widely known in the field of cycling shoes and therefore will not be further described, except to specify that it is preferably fixed to the lower face of sole 4 by means of locking screws (not shown) that preferably only partially penetrate in the body of sole 4.

With reference to Figures 1, 2 and 3, in turn sole 4 comprises a rigid, oblong and substantially plate-like shell 10, which extends substantially skimmed over the foot sole of the user and is made of composite material.

In the shown example, in particular, the rigid shell 10 is preferably substantially oblong-basin shaped and is preferably dimensioned so as to cover the entire foot sole and to additionally accommodate inside itself the lower part of the foot of the user, preferably while surrounding the perimeter edge of the foot substantially without interruption.

Moreover, the rigid shell 10 is provided with one or more plate-like sectors of elastomeric material, that take up the full thickness of rigid shell 10 and are elastically deformable.

In other words, the rigid shell 10 is a monolithic body having at least one composite-material portion or sector and at least one elastomeric-material portion or sector. The composite-material portion(s) and the elastomeric-material portions take up/extend/affect the full thickness of rigid shell 10, and are joined to one another along the edge substantially without interruption.

The composite-material portion(s) and the elastomeric-material portion(s) are therefore contiguous and complementary to each other.

Preferably, each composite-material portion is furthermore formed by one or more superimposed layers of carbon fibres and/or glass fibres and/or aramid fibres (Kevlar) and/or polyester fibres (Vectran), suitably intertwined and/or overlapped to one another, and embedded in a solid polymeric matrix. More in detail, the polymeric matrix is preferably an epoxy thermosetting resin.

Alternatively, the solid polymeric matrix may be a phenolic or polyester thermosetting resin.

Each elastomeric-material portion, on the other hand, basically consists of a layer of vulcanized rubber or other similar elastomeric material joined to the adjacent composite-material portion(s) 11 along the edge and without interruption.

With reference to Figures 1, 2 and 3, in the example shown, in particular, the rigid shell 10 is preferably provided with a single large composite-material portion 11, which preferably extends skimmed over the foot sole of the user, preferably substantially for the entire extension of the foot sole, and with a plurality of small plate-like elastomeric-material portions, which extend for/take up the full thickness of rigid shell 10 and are joined to the composite-material portion 11 along the edge, without interruption.

More in detail, rigid shell 10 is preferably provided with a first, oblong and arched elastomeric-material portion 12 which is arranged on a first piece of rigid shell 10 extending upwardly to cover the tip of upper 2.

Preferably, the elastomeric-material portion 12 is moreover roughly perpendicular to the midplane of the footwear, and is preferably also vertically aligned with the fingers of the foot of the user.

Furthermore, rigid shell 10 is preferably additionally provided with a second, oblong-shaped elastomeric-material portion 13 which is arranged on a second piece of rigid shell 10 extending upwardly to cover the outer side of upper 2.

Preferably, the elastomeric-material portion 13 is moreover arranged substantially beside the metatarsal area of the foot of the user and, preferably, also adjacent to the bottom wall of rigid shell 10.

Preferably, rigid shell 10 is furthermore provided with a third, oblong-shaped elastomeric-material portion 14 which is arranged on a third piece of rigid shell 10 extending upwardly to cover the inner side of upper 2.

Preferably, the elastomeric-material portion 14 is arranged substantially beside to the metatarsal area of the foot of the user and, preferably, also adjacent to the bottom wall of rigid shell 10.

Finally, rigid shell 10 is preferably additionally provided with a fourth, oblong-shaped elastomeric-material portion 15 which is arranged on a fourth piece of rigid shell 10 extending upwardly to cover the rear part of upper 2.

Preferably, the elastomeric-material portion 15 is moreover arranged at the heel of the foot of the user and, preferably, also adjacent to the bottom wall of rigid shell 10.

The elastomeric-material portion 12 allows the front upper part of rigid shell 10 to deform elastically so as to adapt to the shape of the toes of the foot of the user.

The two elastomeric-material portions 13 and 14, on the other hand, allow the front part of rigid shell 10 to adapt to the shape of the forefoot of the user.

Finally, the elastomeric-material portion 15 allows the back of rigid shell 10 to adapt to the shape and/or to the position of the heel of the foot of the user.

General operation of cycling shoe 1 is easily inferable from the above description, and does not require any further explanation.

As regards sole 4, the rigid shell 10 is manufactured via the following production method of a composite-material piece, which allows to produce a monolithic body with a shell structure that is provided with at least one composite-material portion or sector and with at least one elastically-deformable elastomeric-material portion or sector, which are contiguous and complementary to each other.

Moreover, the composite-material portion(s) and the elastomeric-material portion(s) take up the full thickness of the monolithic body with a shell structure, and are joined to one another along the edge and without interruption.

More in detail, the production method will be described assuming to already have a mould 100 with a cavity that copies in negative the shape of the rigid shell 10 to be produced, and to intend to produce a rigid shell 10 with elastomeric-material portions 12, 13, 14 and 15.

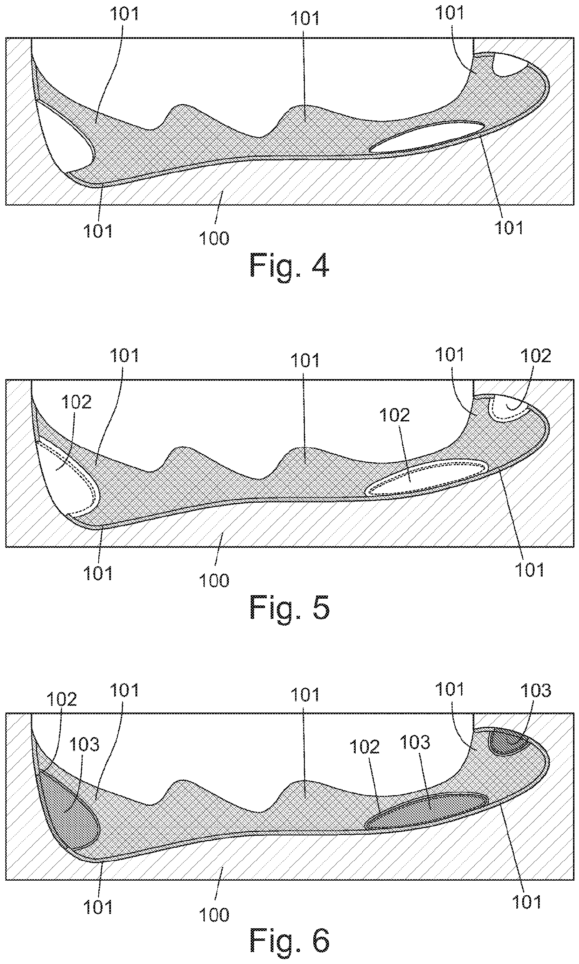

With reference to Figure 4, the production method of rigid shell 10 firstly provides for placing/laying, on the inner surface of mould 100, at least one sheet of pre-impregnated fabric 101, i.e. a sheet formed by one or more pieces of fabric embedded in the preferably thermosetting semi-fluid resin, while leaving uncovered the areas of mould 100 corresponding to the various elastomeric-material portions 12, 13, 14, 15 to be produced.

In the shown example, in particular, the sheet of pre-impregnated fabric 101 has a thickness preferably ranging from 0.2 to 5 mm (millimetres), and is preferably formed of one or more suitably overlapping and/or intertwined pieces of synthetic fabric embedded in a preferably epoxy thermosetting resin.

Preferably, the piece(s) of synthetic fabric are additionally made of carbon fibre and/or glass fibre and/or Kevlar or other aramid fibres and/or Vectran or other polyester fibres.

Alternatively, the thermosetting resin could also be a phenolic or polyester resin.

More in detail, in the example shown the piece of pre-impregnated fabric 101 is preferably formed by one or more pieces of high-strength carbon fibre fabric, embedded in a thermosetting epoxy resin having a polymerization/ reticulation temperature preferably ranging from 100°C to 140°C.

With reference to Figure 5, after having placed the pre-impregnated fabric piece 101 in the cavity of mould 100, the production method of rigid shell 10 provides for placing/laying a thermoplastic elastomeric-material film 102 on the inner surface of mould 100, in the area corresponding to each elastomeric-material portion 12, 13, 14, 15 to be produced, preferably while at least partially overlapping the edge of the thermoplastic elastomeric-material film 102 to the edge of the sheet of pre-impregnated fabric 101.

In other words, the thermoplastic elastomeric-material film 102 occupies an area slightly larger than the area of mould 100 corresponding to the elastomeric-material portion 12, 13, 14, 15 to be produced.

In the shown example, in particular, the thermoplastic elastomeric-material film 102 has a thickness preferably smaller than 0.1 mm (millimetres) and is preferably made of a thermoplastic polyurethane polymer (TPU).

More in detail, the thermoplastic elastomeric-material film 102 is preferably made of an ether-based thermoplastic polyurethane resin.

Alternatively, the thermoplastic elastomeric-material film 102 could also be made of an ester-based thermoplastic polyurethane resin.

Preferably, the thermoplastic elastomeric-material film 102 also has a melting/softening temperature close to the polymerization/reticulation temperature of the thermosetting resin of the sheet of pre-impregnated fabric 101.

More in detail, the thermoplastic elastomeric-material film 102 has a melting/softening temperature preferably ranging from 120°C to 160°C.

Even more in detail, in the example shown, the thermoplastic elastomeric-material film 102 is preferably a film marketed by the company FAIT PLAST SPA of Cellatica (BS) under the name "FAITGOM E/4 crystral".

With reference to Figure 6, after having placed the thermoplastic elastomeric-material film 102 in the cavity of mould 100, the production method of rigid shell 10 provides for placing/laying a sheet of non-vulcanized rubber 103 over the thermoplastic elastomeric-material film 102, in the area corresponding to each elastomeric-material portion 12, 13, 14 and 15 to be produced.

Preferably, the sheet of non-vulcanized rubber 103 is furthermore shaped to remain within the perimeter of the corresponding thermoplastic elastomeric-material film 102.

In other words, the sheet of non-vulcanized rubber 103 does not protrude out of the perimeter of the corresponding thermoplastic elastomeric-material film 102.

In the shown example, in particular, the sheet of non-vulcanized rubber 103 has a thickness preferably ranging from 0.2 to 5 mm (millimetres), and is preferably made of a non-reticulated synthetic rubber with a vulcanization temperature preferably ranging from 120°C to 160°C. I.e. with a vulcanization temperature substantially equal to the polymerization/reticulation temperature of the thermosetting resin of the sheet of pre-impregnated fabric 101.

More in detail, the sheet of non-vulcanized rubber 103 is preferably made of EPDM rubber and has a vulcanization temperature preferably equal to about 140°C.

Even more in detail, in the example shown, the sheet of non-vulcanized rubber 103 is preferably made of synthetic rubber marketed by the company GUMMIWERK KRAIBURG GMBH & Co. KG of Waldkraiburg under the name "KRAIBON".

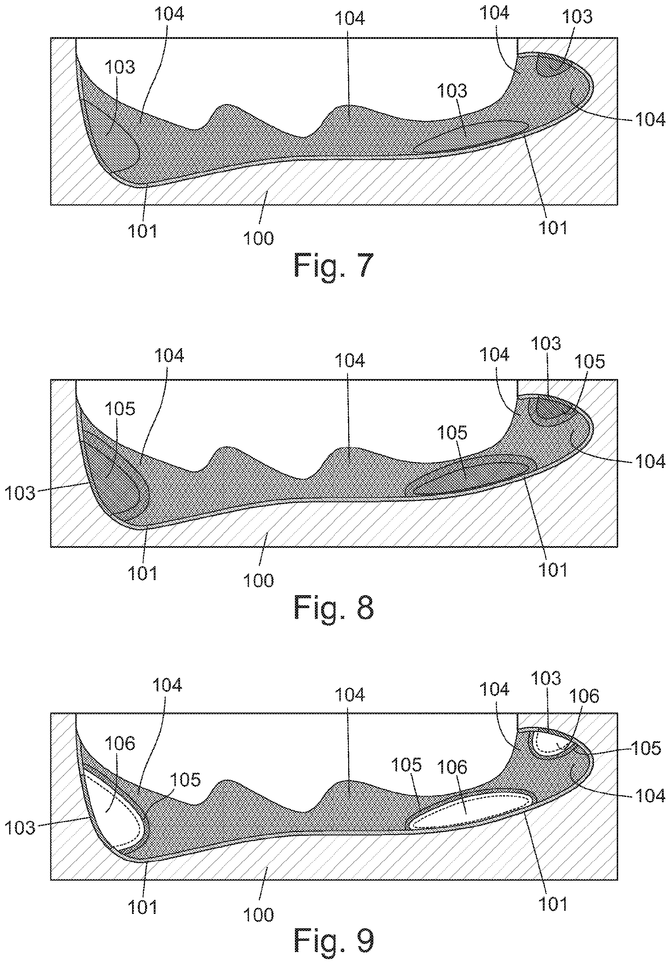

With reference to Figure 7, after having placed the sheet of non-vulcanized rubber 103 in the cavity of mould 100, the production method of rigid shell 10 preferably, though not necessarily, provides for placing/laying, over the sheet of pre-impregnated fabric 101, a second sheet of pre-impregnated fabric 104, i.e. a sheet formed by one or more pieces of fabric embedded in the thermosetting semi-fluid resin, while leaving uncovered the areas of the mould 100 corresponding to the elastomeric-material portions 12, 13, 14 and 15 to be produced. Preferably, the edge of the second sheet of pre-impregnated fabric 104 furthermore at least partially overlaps the edge of each sheet of non-vulcanized rubber 103.

Also in this case, the sheet of pre-impregnated fabric 104 has a thickness preferably ranging from 0.2 to 5 mm (millimetres) and is preferably formed by one or more suitably overlapping pieces of synthetic fabric embedded in a preferably epoxy thermosetting resin. Preferably, the piece(s) of synthetic fabric are also made of carbon fibre and/or glass fibre and/or Kevlar or other aramid fibres and/or Vectran or other polyester fibres.

More in detail, in the example shown, the sheet of pre-impregnated fabric 104 is preferably made of the same material as the sheet of pre-impregnated fabric 101.

With reference to Figure 8, after having placed the sheet of non-vulcanized rubber 103 or, if provided, the sheet of pre-impregnated fabric 104 in the cavity of mould 100, the production method of rigid shell 10 preferably, though not necessarily, provides for placing/laying at least one sheet of reinforcing synthetic fabric 105 with high strength yarns over the sheet of non-vulcanized rubber 103 and the sheet of pre-impregnated fabric 101, and, if present, even over the sheet of pre-impregnated fabric 104.

More in detail, in the example shown the piece of synthetic fabric 105 is preferably made of Kevlar or other aramid fibre. Alternatively, the piece of synthetic fabric 105 could also be made of polyester fibres such as, for example, the mono-oriented polyarylated polyester (commercially known as VECTRAN).

Obviously, the production method of rigid shell 10 can provide for placing/laying the piece of synthetic fabric 105 over even one single sheet of non-vulcanized rubber 103, i.e. over the sheet of non-vulcanized rubber 103 corresponding to a single elastomeric-material portion 12, 13, 14, 15 to be produced.

With reference to Figure 9, after having placed the sheet of non-vulcanized rubber 103 and, if provided, the sheet of pre-impregnated fabric 104 and/or the piece of synthetic fabric 105 in the cavity of mould 100, the production method of rigid shell 10 provides for placing/ laying a second thermoplastic elastomeric-material film 106 over the piece of synthetic fabric 105 or the sheet of pre-impregnated fabric 104 and in any case over the sheet of non-vulcanized rubber 103, to completely cover the area of the mould corresponding to the elastomeric-material portion 12, 13, 14, 15 to be produced, preferably while at least partially overlapping the edge of the thermoplastic elastomeric-material film 106 to the edge of the sheet of pre-impregnated fabric 101 or 104 and/or the edge of the thermoplastic elastomeric-material film 102.

In other words, at each elastomeric-material portion 12, 13, 14 and/or 15 to be produced, the sheet of non-vulcanized rubber 103 is enclosed between the thermoplastic elastomeric-material film 102 and the thermoplastic elastomeric-material film 106, optionally together with the edge of the second sheet of pre-impregnated fabric 104 and/or the piece of synthetic fabric 105.

In the example shown, in particular, the thermoplastic elastomeric-material film 106 has a thickness preferably smaller than 0.5 mm (millimetres), and is preferably made of the same material as the thermoplastic elastomeric-material film 102.

Finally, after having placed the thermoplastic elastomeric-material film 106 in the cavity of mould 100, the production method of rigid shell 10 provides for extracting the air from the mould 100 and then subjecting the mould 100 and all of its contents to a thermal baking cycle, which simultaneously causes the vulcanization of the sheet of non-vulcanized rubber 103 and the polymerisation/ reticulation and hardening of the resin of the sheet of pre-impregnated fabric 101 and, if present, of the sheet of pre-impregnated fabric 104.

More in detail, the production method of rigid shell 10 preferably provides for placing the mould 100 and all of its contents inside an autoclave oven of known type (not shown), and for subjecting the mould 100 and all of its contents to a thermal baking cycle that provides for bringing and maintaining the mould 100 and its contents at a temperature preferably higher than 110°C for a given time interval, and which is enough to cause and complete the vulcanization of the sheet of non-vulcanized rubber 103, the adhesion of the thermoplastic elastomeric material films 102 and 106 to the sheet of non-vulcanized rubber 103 and the complete hardening of the thermosetting resin of the sheet of pre-impregnated fabric 101 and, if present, of the sheet of pre-impregnated fabric 104.

In the example shown, in particular, the thermal baking cycle preferably involves bringing the mould 100 and all of its contents to a temperature ranging from 120°C to 140°C, for a time interval preferably ranging from 5 to 30 minutes.

At the end of the thermal baking cycle, a monolithic rigid shell is formed inside the mould 100, said shell having the shape of rigid shell 10 and being provided with a part of rigid composite material and with four contiguous and complementary parts of flexible, elastomeric material.

Obviously, the part made of rigid composite material corresponds to the composite-material portion 11, whereas the parts made of elastomeric material correspond to the elastomeric-material portions 12, 13, 14 and 15 of the rigid shell 10.

Finally, at the end of the thermal baking cycle, the production method of rigid shell 10 provides for the extraction of the resulting rigid shell 10 from the mould 100.

Clearly, the production method described above allows to also produce a rigid shell 10 provided with a single elastomeric-material portion.

The advantages deriving from the particular structure of the sole 4 are remarkable.

Firstly, despite the rigid shell 10 being a monolithic body predominantly made of composite material, the elastomeric-material portions 12, 13, 14 and 15 in any case allow the rigid shell 10 to encircle the entire perimeter of the foot of the user and to also deform/expand locally, so as to adapt its shape to the one of the foot of the user, with all advantages that this entails to the fitting comfort.

Finally, it is clear that modifications and variations can be made to the aforementioned cycling shoe 1 and/or to the sole 4 without departing from the scope of the present invention.

For example, the upper 2 can be closed by laces or by cable and winch tying devices, e.g. marketed by the US company BOA TECHNOLOGY INC.

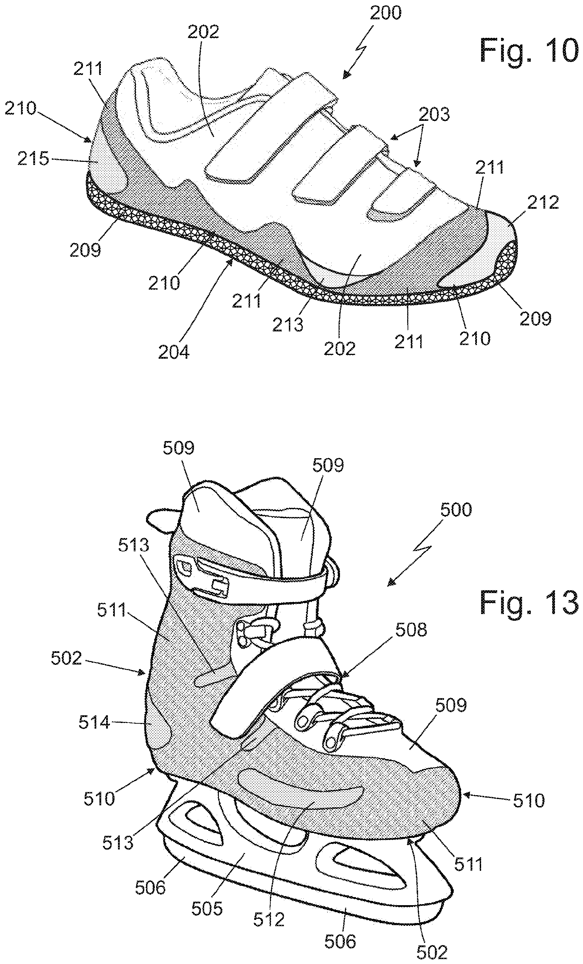

Moreover, with reference to Figure 10, the production method described above can be advantageously used also for producing the semi-rigid body of the sole unit of a running shoe 200 or the like.

More in detail, the running shoe 200 comprises: an upper 202 made of leather, fabric or other flexible and optionally also breathable soft material, which is shaped to accommodate and cover the foot of the user, preferably roughly up to the height of the ankle, and is preferably provided with Velcro straps 203 or other manually operated closing means; and a lower sole assembly 204 which is stably fixed to the lower part of upper 202, preferably by sewing and/or gluing, to cover the foot sole.

The sole assembly 204 in turn comprises: a preferably substantially oblong basin-shaped, semi-rigid shell 210 which is shaped/structured so as to accommodate and enclose /contain the lower part of the foot of the user; and a plate-like outer sole 209 preferably having a treaded profile, which is made of vulcanized rubber or other polymeric material having a high friction coefficient and is firmly secured to the bottom wall of the rigid shell 210, preferably by gluing.

Analogously to the rigid shell 10, also the rigid shell 210 is made of composite material and is furthermore provided with one or more plate-like elastomeric-material sectors, which take up the full thickness of rigid shell 210 and are elastically deformable.

In other words, rigid shell 210 is a monolithic body divided into at least one composite-material portion or sector and into one or more elastomeric-material portions or sectors that locally take up the full thickness of rigid shell 210 and are joined to one another along the edge and without interruption. The composite-material portion(s) and the elastomeric-material portion(s) are contiguous and complementary to each other.

With reference to Figure 10, in the example shown, in particular, the rigid shell 210 is preferably provided with a single, large composite-material portion 211 that extends skimmed over the foot sole of the user, preferably substantially for the whole extension of the foot sole; and with a plurality of small, plate-like elastomeric-material portions that extend for/take up the full thickness of rigid shell 210 and are joined to the composite material portion 211 along the edge, without interruption.

Preferably, the composite-material portion 211 moreover has an elastically flexible structure so as to follow the bending of the foot of the user while running.

More in detail, in the example shown, the thickness of the composite material portion 211 and/or the arrangement of the carbon fibres or the like inside the composite-material portion 211 is/are preferably selected so as to allow the rigid shell 210 to bend elastically at least in the area below the metatarsal-phalangeal area of the foot sole of the user.

Furthermore, the rigid shell 210 is preferably provided with a first elastomeric-material portion 212 which is arranged on a first piece of rigid shell 210 extending upwardly so as to cover the tip of upper 202.

Moreover, rigid shell 210 is preferably additionally provided with a second elastomeric-material portion 213 which is arranged on a second piece of rigid shell 210 extending upwardly so as to cover the outer side of upper 202. Preferably, the elastomeric-material portion 213 is moreover arranged substantially beside the metatarsal-phalangeal area of the foot of the user.

Preferably, rigid shell 210 is further provided with a third elastomeric-material portion (not visible in the Figure), which is arranged on a third piece of rigid shell 210 extending upwardly so as to cover the inner side of upper 202. Preferably, the third elastomeric-material portion is moreover arranged substantially beside the metatarsal-phalangeal area of the foot of the user.

Finally, rigid shell 210 is preferably additionally provided with a fourth elastomeric-material portion 215 which is arranged on a fourth piece of the rigid shell 210 extending upwardly so as to cover the rear part of upper 202. Preferably, the elastomeric-material portion 215 is furthermore shaped so as to substantially cover/embrace the entire heel of the foot of the user.

Obviously, the mould used to produce the rigid shell 210 has a cavity that copies in negative the shape of the entire rigid shell 210 to be produced, and the sheet of pre-impregnated fabric 101, the thermoplastic elastomeric-material film 102, the sheet of non-vulcanized rubber 103, the second thermoplastic elastomeric-material film 106 and, if provided, the second sheet of pre-impregnated fabric 104 and/or the piece of reinforcing synthetic fabric 105 are arranged within the mould cavity so as to make the entire rigid shell 210.

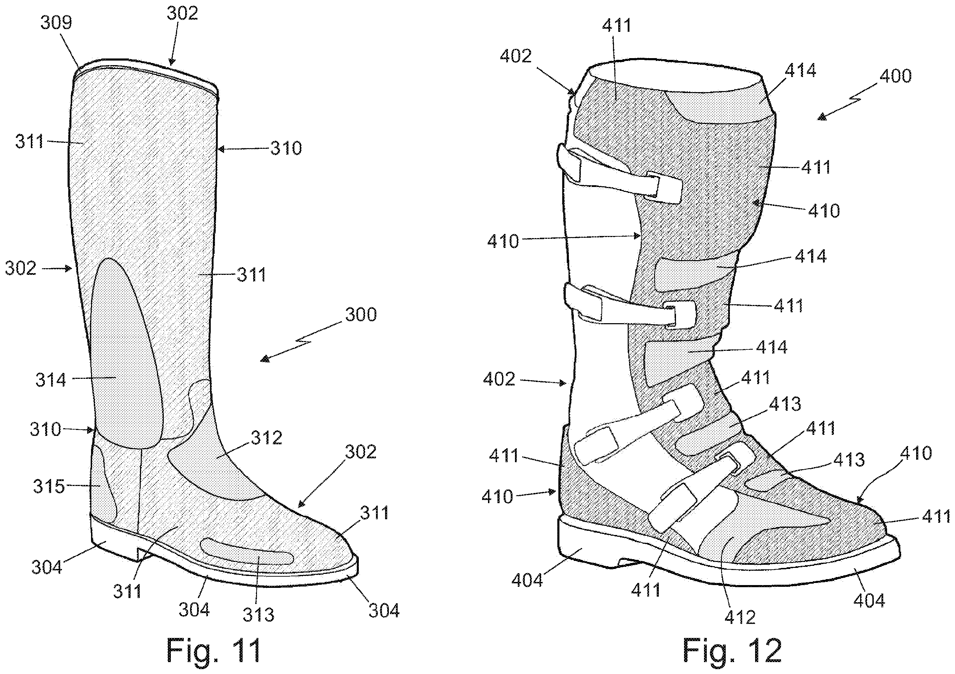

Moreover, with reference to Figure 11, the production method described above can also be advantageously used to make the composite-material body of the upper of a riding boot 300 or the like.

More in detail, riding boot 300 preferably comprises: a semi-rigid upper 302 which is shaped so as to accommodate and cover the foot and the leg of the user, preferably roughly up to the height of the knee; and a sole 304, preferably with a treaded profile, which is made of vulcanized rubber or other polymeric material having a high friction coefficient, and is firmly fixed to the lower part of the semi-rigid upper 302, preferably by sewing and/or gluing, so as to cover the foot sole of the user.

The semi-rigid upper 302 in turn comprises: an outer rigid shell 310 which is preferably shaped so as to accommodate and cover the foot and the leg of the user, preferably roughly up to the height of the knee; and preferably also an inner protective lining 309 which is made of a soft, flexible and optionally also breathable material, and is adapted to coat/cover the inner surface of rigid shell 310 so as to be interposed between the rigid shell 310 and the foot or the leg of the user.

Analogously to rigid shell 10, also rigid shell 310 is made of composite material and is furthermore provided with one or more plate-like elastomeric-material sectors, which take up the full thickness of rigid shell 310 and are elastically deformable.

In other words, rigid shell 310 is a monolithic body divided into at least one composite-material portion or sector and into one or more elastomeric-material portions or sectors, which locally take up the full thickness of rigid shell 310 and are joined to one another along the edge and without interruption. The composite-material portion(s) and the elastomeric-material portion(s) are contiguous and complementary to each other.

With reference to Figure 11, in the example shown, in particular, the rigid shell 310 is preferably provided with a single, large composite-material portion 311; and with a plurality of small plate-like elastomeric-material portions which extend for/take up the full thickness of rigid shell 310 and are joined to the composite-material portion 311 along the edge, without interruption.

More in detail, in the shown example, the rigid shell 310 is preferably provided with a first elastomeric-material portion 312 which is preferably arranged on the front upper part of upper 302, more or less across the instep of the user and preferably further extends over the tibiotarsal joint.

Preferably, the rigid shell 310 is furthermore provided with a second elastomeric-material portion 313 which is preferably arranged on the outer side of upper 302, substantially beside the metatarsal-phalangeal area of the foot of the user.

Preferably, the rigid shell 310 is moreover provided with a third oblong-shaped elastomeric-material portion 314 which is preferably arranged on the outer side of the bootleg of upper 302, substantially at the height of the malleolus, and preferably also extends upwards, roughly up to mid-calf.

Finally, rigid shell 310 is preferably additionally provided with a fourth elastomeric-material portion 315 which is arranged on the rear part of upper 302, more or less across the heel of the foot of the user.

Obviously, the mould used to produce the rigid shell 310 has a cavity that copies in negative the shape of the entire rigid shell 310 to be produced, and the sheet of pre-impregnated fabric 101, the thermoplastic elastomeric-material film 102, the sheet of non-vulcanized rubber 103, the second thermoplastic elastomeric-material film 106 and, if provided, the second sheet of pre-impregnated fabric 104 and/or the piece of reinforcing synthetic fabric 105 are arranged within the mould cavity so as to make the entire rigid shell 310.

With reference to Figure 12, the production method described above can be advantageously used to additionally realize one or more protective composite-material plates or shells of the upper of a motorcycle boot 400 or the like.

More in detail, the motorcycle boot 400 preferably comprises: a semi-rigid upper 402 which is made of leather of congruous thickness or of another semi-rigid material, and which is shaped so as to accommodate and cover the foot and the leg of the user, preferably roughly up to the height of the knee; at least a first protective rigid plate or shell 410 which is preferably arranged on the front-upper portion of upper 402, preferably so as to cover the upper 402 from the tip substantially up to the mouth of the bootleg; and a sole 404, preferably with a treaded profile, which is made of vulcanized rubber or other polymeric material having a high friction coefficient, and is firmly fixed to the lower part of semi-rigid upper 402, preferably by sewing and/or gluing, so as to cover the foot sole of the user.

Preferably, the rigid protective plate or shell 410 is furthermore shaped so as to helically wind around the bootleg of upper 402, so as to cover the inner side of upper 402 and preferably also the rear portion of upper 402, thus protecting the heel of the foot of the user as well.

Analogously to rigid shell 10, the rigid plate or shell 410 is made of composite material and is also provided with one or more plate-like elastomeric-material sectors, which take up the full thickness of rigid shell 410 and are elastically deformable.

In other words, the rigid shell 410 is a plate-like monolithic body divided into at least one composite-material portion or sector and into one or more elastomeric-material portions or sectors, which locally take up the full thickness of rigid shell 410 and are joined to one another along the edge and without interruption. The composite-material portion(s) and the elastomeric-material portion(s) are contiguous and complementary to each other.

With reference to Figure 12, in the shown example, in particular, rigid shell 410 is preferably provided with a single, large composite-material portion 411; and with a plurality of small plate-like elastomeric-material portions which extend for/take up the full thickness of rigid shell 410 and are joined to the composite-material portion 411 along the edge, without interruption.

More in detail, in the example shown rigid shell 410 is preferably provided with a first elastomeric-material portion 412 that is preferably arranged on the outer side of upper 402, substantially beside the metatarsal-phalangeal area of the foot of the user.

Preferably, rigid shell 410 is furthermore provided with one or more, second oblong-shaped elastomeric-material portions 413 that are arranged on the front-upper portion of the upper 402, spaced beside the other, more or less astride the instep of the foot of the user.

Preferably, the rigid shell 410 is furthermore provided with one or more, third oblong-shaped elastomeric-material portions 414 that are arranged on the bootleg of upper 402, spaced one above the other, more or less astride the front part of the leg of the user.

Obviously, the mould used to produce the rigid shell 410 has a cavity that copies in negative the shape of the entire rigid shell 410 to be produced, and the sheet of pre-impregnated fabric 101, the thermoplastic elastomeric-material film 102, the sheet of non-vulcanized rubber 103, the second thermoplastic elastomeric-material film 106 and, if provided, the second sheet of pre-impregnated fabric 104 and/or the piece of reinforcing synthetic fabric 105 are arranged within the mould cavity so as to make the entire rigid shell 410.

With reference to Figure 13, the production method described above can be advantageously used to also make the composite-material shell of the foot-casing of an ice skate 500.

More in detail, the ice skate 500 preferably comprises: a substantially rigid foot-casing 502 which is substantially boot-shaped so as to accommodate the foot and the lower part of the leg of the user; a rigid fin 505 which is preferably substantially crescent-shaped and projects in cantilever manner from the lower wall of foot-casing 502 while remaining substantially coplanar to the midplane of the footwear; and a substantially straight support blade 506 which is preferably made of metallic material and is fixed to the distal edge of rigid fin 505, substantially horizontal and coplanar to the midplane of the footwear.

In turn, the foot-casing 502 comprises: a substantially oblong-basin shaped, rigid shell 510 which is shaped/ structured so as to accommodate and enclose the foot and the lower part of the leg of the user, preferably roughly up to the height of the calf; and preferably also a substantially boot-shaped, inner liner 509 which is shaped so as to accommodate and protect the foot and the lower part of the leg of the user, is firmly inserted inside the foot-casing 502 preferably in manually removable manner, and is preferably provided with laces and Velcro straps 508 capable to holding the foot and the leg of the user inside the liner 509.

Obviously, laces and/or Velcro straps 508 may be replaced by other manually-operated closing means, which are capable to hold the foot and the leg of the user inside the liner 509.

Analogously to rigid shell 10, the rigid shell 510 is additionally made of a composite material and is moreover provided with at least one, and preferably a plurality of plate-like elastomeric-material sectors, which take up the full thickness of rigid shell 510 and are elastically deformable.

In other words, the rigid shell 510 is a plate-like monolithic body divided into at least one composite-material portion or sector and into one or more elastomeric-material portions or sectors, which locally take up the full thickness of rigid shell 510 and are joined to one another along the edge and without interruption. The composite-material portion(s) and the elastomeric-material portion(s) are contiguous and complementary to each other.

With reference to Figure 13, in the shown example, in particular, the rigid shell 510 is preferably provided with a single large composite-material portion 511; and with a plurality of small plate-like elastomeric-material portions that extend for/take up the full thickness of rigid shell 510 and are joined to the composite material portion 511 along the edge, without interruption.

More in detail, in the example shown the rigid shell 510 is preferably provided with a first, oblong-shaped elastomeric-material portion 512 which is preferably located on the outer side of foot-casing 502, substantially beside the metatarsal-phalangeal zone of the foot of the user.

Preferably, the rigid shell 510 is furthermore provided with a plurality of second elastomeric-material portions 513 which are distributed on the inner and outer sides of foot-casing 502, in pairs aligned on opposite sides of the midplane of the footwear, more or less at the height of the instep and of the tibiotarsal joint.

Finally, the rigid shell 510 is preferably additionally provided with a third elastomeric-material portion 514 which is arranged on the rear part of foor-casing 502, at the heel of the foot of the user.

Obviously, the mould used to produce the rigid shell 510 has a cavity that copies in negative the shape of the entire rigid shell 510 to be produced, and the sheet of pre-impregnated fabric 101, the thermoplastic elastomeric-material film 102, the sheet of non-vulcanized rubber 103, the second thermoplastic elastomeric-material film 106 and, if provided, the second sheet of pre-impregnated fabric 104 and/or the piece of reinforcing synthetic fabric 105 are arranged within the mould cavity so as to make the entire rigid shell 510.

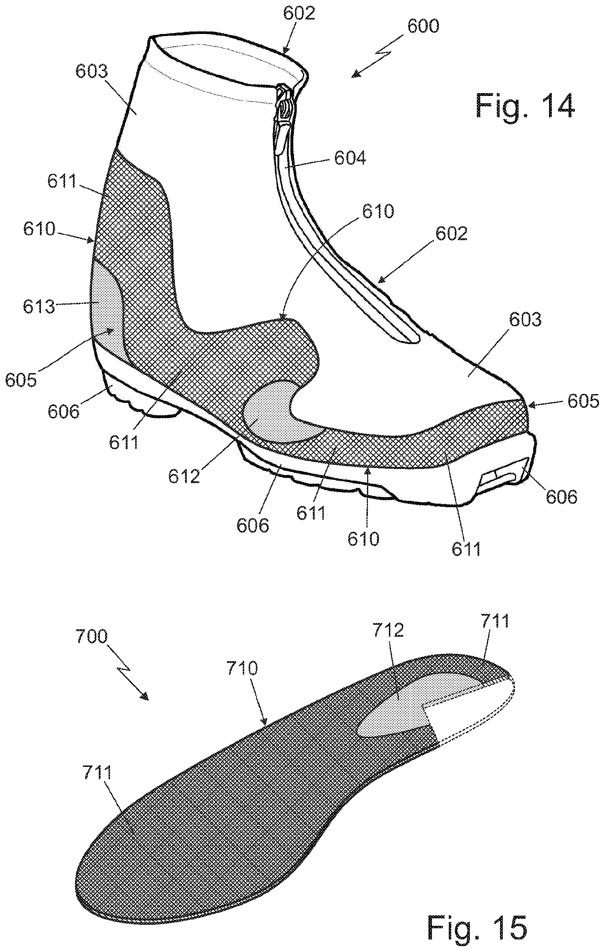

With reference to Figure 14, the production method described above can be advantageously used to also make the supporting body of the upper of a cross-country ski shoe 600 or the like.

More in detail, the cross-country ski shoe 600 comprises: a substantially boot-shaped upper 602 which has a soft and thermal insulating structure, is shaped so as to accommodate and protect the foot and the lower part of the leg of the user, preferably roughly up to the height of the calf, and which preferably includes a substantially tubular -frustoconical-shaped, outer gaiter 603 which is made of waterproof material and is preferably closed by a watertight zipper 604; a preferably substantially oblong basin-shaped supporting body 605 which is firmly fixed to the lower part of upper 602 so as to cover and protect the foot of the user, preferably roughly up to the height of the ankle; and a semi-rigid sole assembly 606 which is preferably firmly fixed to the bottom of semi-rigid body 605 preferably by gluing, and is specifically designed to be coupled/engaged in known manner to a traditional cross-country ski binding device (not shown), which in turn is firmly fixed on the back of a cross-country ski.

Moreover, supporting body 605 basically consists of a preferably oblong basin-shaped rigid shell 610 which is made of composite material and is additionally provided with one or more plate-like elastomeric-material sectors, which take up the full thickness of rigid shell 610 and are elastically deformable.

In other words, rigid shell 610 is a plate-like monolithic body divided into at least one composite-material portion or sector and into one or more elastomeric -material portions or sectors, which locally take up the full thickness of rigid shell 610 and are joined to one another along the edge and without interruption. The composite-material portion(s) and the elastomeric-material portion(s) are contiguous and complementary to each other.

With reference to Figure 14, in the example shown, in particular, the rigid shell 610 is preferably provided with a single, large composite-material portion 611; and with a plurality of small, plate-like elastomeric-material portions that extend for/take up the full thickness of rigid shell 610 and are joined to the composite material portion 611 along the edge, without interruption.

More in detail, in the shown example, the rigid shell 610 is preferably provided with a first oblong-shaped elastomeric-material portion 612 which is preferably located on the outer side of upper 602, substantially beside the metatarsal-phalangeal area of the foot of the user.

Moreover, rigid shell 610 is preferably provided with a second elastomeric-material portion 613 which is located on the rear part of upper 602, at the heel of the foot of the user.

Obviously, the mould used to produce rigid shell 610 has a cavity that copies in negative the shape of the entire rigid shell 610 to be produced, and the sheet of pre-impregnated fabric 101, the thermoplastic elastomeric-material film 102, the sheet of non-vulcanized rubber 103, the second thermoplastic elastomeric-material film 106 and, if provided, the second sheet of pre-impregnated fabric 104 and/or the piece of reinforcing synthetic fabric 105 are arranged within the mould cavity so as to make the entire rigid shell 610.

With reference to Figure 15, finally, the production method described above can be advantageously used to also make an innersole or foot-bed 700 suitable to be manually removably inserted inside a shoe.

More in detail, the innersole or foot-bed 700 preferably comprises two plate-like composite-material shells 710 that substantially copy the shape of the foot sole, and are arranged one over the other with the interposition of at least one layer of polymeric material foam, preferably of the shape memory type. In a simplified embodiment, however, the innersole or foot-bed 700 could comprise a single plate-like composite-material shell 710, that obviously copies the shape of the foot sole.

Analogously to rigid shell 10, the plate-like shell 710 consists of a plate-like monolithic body which is divided into at least one composite-material portion or sector and into one or more elastomeric-material portions or sectors, which locally take up the full thickness of plate-shaped shell 710 and are joined to one another along the edge and without interruption. The composite-material portion(s) and the elastomeric-material portion(s) are contiguous and complementary to each other.

With reference to Figure 15, in the example shown, in particular, the plate-like shell 710 is preferably provided with a single, oblong-shaped composite-material portion 711 that preferably substantially copies the shape of the foot sole, and with a small, plate-like elastomeric-material portion 712 that extends for/takes up the full thickness of plate-like shell 710 and is joined to the composite material portion 711 along the edge, without interruption.

More in detail, in the shown example the elastomeric-material portion 712 is preferably arranged in the area of innersole or foot-bed 700 that, in use, is immediately beneath the astragalo-calcaneal region of the foot sole of the user.

Obviously, the plate-like shell 710 could be provided with two or more plate-shaped elastomeric-material portions 712.

Clearly, the mould used to produce the plate-like shell 710 has a cavity that copies in negative the shape of the entire plate-like shell 710 to be produced, and the sheet of pre-impregnated fabric 101, the thermoplastic elastomeric-material film 102, the sheet of non-vulcanized rubber 103, the second thermoplastic elastomeric-material film 106 and, if provided, the second sheet of pre-impregnated fabric 104 and/or the piece of reinforcing synthetic fabric 105 are arranged within the mould cavity so as to make the entire plate-like shell 710.

## Claims

1. Production method of a composite-material component (10, 210, 310, 410, 510, 610, 710) of a footwear (1, 200, 300, 400, 500, 600, 700); said component being a monolithic body with a shell structure (10, 210, 310, 410, 510, 610, 710) that has at least one composite-material portion (11, 211, 311, 411, 511, 611, 711) and at least one elastomeric-material portion (12, 13, 14, 15; 212, 213, 215; 312, 313, 314, 315; 412, 413, 414; 512, 513, 514; 612, 613; 712) adjacent to one another; said at least one composite-material portion (11, 211, 311, 411, 511, 611, 711) and said at least one elastomeric-material portion (12, 13, 14, 15; 212, 213, 215; 312, 313, 314, 315; 412, 413, 414; 512, 513, 514; 612, 613; 712) extending for the full thickness of the monolithic body with a shell structure (10, 210, 310, 410, 510, 610, 710) and being joined to one another along the edge and without interruption;
said production method being **characterised by** comprising the steps of:
- placing/laying at least a first sheet of pre-impregnated fabric (101) onto the surface of a mould (100) that copies in negative the shape of the monolithic body with a shell structure (10, 210, 310, 410, 510, 610, 710) to be produced, while leaving uncovered the area of the mould (100) corresponding to the elastomeric-material portion (12, 13, 14, 15; 212, 213, 215; 312, 313, 314, 315; 412, 413, 414; 512, 513, 514; 612, 613; 712) to be produced;
- placing/laying a first elastomeric thermoplastic material film (102) on the surface of the mould (100), in the area of the mould (100) corresponding to the elastomeric-material portion (12, 13, 14, 15; 212, 213, 215; 312, 313, 314, 315; 412, 413, 414; 512, 513, 514; 612, 613; 712) to be produced, at least partially overlapping the edge of said first thermoplastic elastomeric-material film (102) to said first sheet of pre-impregnated fabric (101);
- placing/laying a sheet of non-vulcanized rubber (103) over said first elastomeric thermoplastic material film (102), in the area of the mould (100) corresponding to the elastomeric-material portion (12, 13, 14, 15; 212, 213, 215; 312, 313, 314, 315; 412, 413, 414; 512, 513, 514; 612, 613; 712) to be produced;
- placing/laying a second thermoplastic elastomeric-material film (106) over said sheet of non-vulcanized rubber (103), at least partially overlapping the edge of said second thermoplastic elastomeric-material film (106) and said first sheet of pre-impregnated fabric (101) and/or said first thermoplastic elastomeric-material film (102); and finally
- extracting the air from the mould (100) and then subjecting the mould (100) and all its contents to a thermal baking cycle which simultaneously causes the vulcanization of the sheet of non-vulcanized rubber (103), and the polymerisation/reticulation and hardening of the thermosetting resin of said first sheet of pre-impregnated fabric (101).

2. Production method of a composite-material component according to claim 1, **characterised in that** said sheet of non-vulcanized rubber (103) is shaped so as to remain inside the perimeter of said first thermoplastic elastomeric-material film (102).

3. Production method of a composite-material component according to claim 1 or 2, **characterised by** additionally comprising the step of placing/laying, over said first sheet of pre-impregnated fabric (101) and under said second elastomeric thermoplastic material film (106), a second sheet of pre-impregnated fabric (104), while leaving uncovered the area of the mould (100) corresponding to the elastomeric-material portion (12, 13, 14, 15; 212, 213, 215; 312, 313, 314, 315; 412, 413, 414; 512, 513, 514; 612, 613; 712) to be produced.

4. Production method of a composite-material component according to claim 3, **characterised in that** the edge of said second sheet of pre-impregnated fabric (104) at least partially overlaps the edge of said sheet of non-vulcanized rubber (103).

5. Production method of a composite-material component according to any one of the preceding claims, **characterised by** additionally comprising the step of placing/laying, over said first sheet of pre-impregnated fabric (101) and under said second elastomeric thermoplastic material film (106), at least a piece of reinforcing synthetic fabric (105), which also extends over the sheet of non-vulcanized rubber (103) .

6. Production method of a composite-material component according to claim 5, **characterised in that** said piece of reinforcing synthetic fabric (105) is made of aramid fibres and/or polyester fibres.

7. Production method of a composite-material component according to any one of the preceding claims, **characterised in that** said first sheet of pre-impregnated fabric (101) is made up of one or more pieces of synthetic fabric suitably overlapped to one another and embedded in a preferably epoxy, thermosetting resin.

8. Production method of a composite-material component according to any one of the preceding claims, **characterised in that** said first (102) and/or said second (106) elastomeric thermoplastic material film is/are made of a thermoplastic polyurethane polymer (TPU).

9. Production method of a composite-material component according to claim 8, **characterised in that** said thermoplastic polyurethane polymer (TPU) is an ether-based thermoplastic polyurethane resin.

10. Production method of a composite-material component according to any one of the preceding claims, **characterised in that** said sheet of non-vulcanized rubber (103) is made of a non-reticulated synthetic rubber with a vulcanisation temperature substantially equal to the polymerisation/reticulation temperature of the thermosetting resin of said first sheet of pre-impregnated fabric (101); preferably the thickness of said sheet of non-vulcanized rubber (103) furthermore ranging between 0,2 and 5 mm.

11. Production method of a composite-material component according to claim 10, **characterised in that** said sheet of non-vulcanized rubber (103) is made of EPDM rubber.

12. Footwear (1, 200, 300, 400, 500, 600) comprising at least one monolithic body with a shell structure (10, 210, 310, 410, 510, 610, 710), that has at least one composite-material portion (11, 211, 311, 411, 511, 611, 711) and at least one elastomeric-material portion (12, 13, 14, 15; 212, 213, 215; 312, 313, 314, 315; 412, 413, 414; 512, 513, 514; 612, 613; 712) adjacent to one another;
said footwear (1, 200, 300, 400, 500, 600) being **characterised in that** said monolithic body with a shell structure (10, 210, 310, 410, 510, 610, 710) is made according to any one of Claims from 1 to 11.

13. Insole (700) comprising at least a monolithic body with a shell structure (710) that has at least one composite-material portion (711) and at least one elastomeric-material portion (712) adjacent to one another;
said insole (700) being **characterised in that** said monolithic body with a shell structure (710) is made according to any one of Claims from 1 to 11.

## Patentansprüche

1. Herstellungsverfahren einer Verbundwerkstoffkomponente (10, 210, 310, 410, 510, 610, 710) eines Schuhs (1, 200, 300, 400, 500, 600, 700); wobei die Komponente ein monolithischer Körper mit einer Schalenstruktur (10, 210, 310, 410, 510, 610, 710) ist, die mindestens einen Verbundwerkstoffabschnitt (11, 211, 311, 411, 511, 611, 711) und mindestens einen Elastomerwerkstoffabschnitt (12, 13, 14, 15; 212, 213, 215; 312, 313, 314, 315; 412, 413, 414; 512, 513, 514; 612, 613; 712) aufweist, die zueinander benachbart sind; wobei der mindestens eine Verbundwerkstoffabschnitt (11, 211, 311, 411, 511, 611, 711) und der mindestens eine Elastomerwerkstoffabschnitt (12, 13, 14, 15; 212, 213, 215; 312, 313, 314, 315; 412, 413, 414; 512, 513, 514; 612, 613; 712) sich über die volle Dicke des monolithischen Körpers mit einer Schalenstruktur (10, 210, 310, 410, 510, 610, 710) erstrecken und entlang der Kante und ohne Unterbrechung miteinander verbunden sind;
wobei das Herstellungsverfahren **dadurch gekennzeichnet ist, dass** es die folgenden Schritte umfasst:
- Platzieren / Legen mindestens einer ersten Lage aus vorimprägniertem Gewebe (101) auf die Oberfläche einer Form (100), die die Form des monolithischen Körpers negativ nachbildet, mit einer Schalenstruktur (10, 210, 310, 410, 510, 610, 710), die hergestellt werden soll, während der Bereich der Form (100), der dem Elastomerwerkstoffabschnitt (12, 13, 14, 15; 212, 213, 215; 312, 313, 314, 315; 412, 413, 414; 512, 513, 514; 612, 613; 712), der hergestellt werden soll, entspricht, unbedeckt gelassen wird;
- Platzieren / Legen einer ersten thermoplastische Elastomerwerkstofffolie (102) auf der Oberfläche der Form (100) im Bereich der Form (100), der dem Elastomerwerkstoffabschnitt (12, 13, 14, 15; 212, 213, 215; 312, 313, 314, 315; 412, 413, 414; 512, 513, 514; 612, 613; 712), der hergestellt werden soll, entspricht, wobei sich die Kante der ersten thermoplastischen Elastomerwerkstofffolie (102) mit der ersten Lage aus vorimprägniertem Gewebe (101) zumindest teilweise überlappt;
- Platzieren / Legen einer Lage aus nicht vulkanisiertem Kautschuk (103) über die erste thermoplastische Elastomerwerkstofffolie (102) im Bereich der Form (100), der dem Elastomerwerkstoffabschnitt (12, 13, 14, 15; 212, 213, 215; 312, 313, 314, 315; 412, 413, 414; 512, 513, 514; 612, 613; 712), der hergestellt werden soll, entspricht;
- Platzieren / Legen einer zweiten thermoplastischen Elastomerwerkstofffolie (106) über die Lage aus nicht vulkanisiertem Kautschuk (103), wobei sich die Kante der zweiten thermoplastischen Elastomerwerkstofffolie (106) und die erste Lage aus vorimprägniertem Gewebe (101) und / oder die erste thermoplastische Elastomerwerkstofffolie (102) zumindest teilweise überlappt; und schließlich
- Extrahieren der Luft aus der Form (100) und anschließendes Unterziehen der Form (100) und ihres gesamten Inhalts einem thermischen Backzyklus, der gleichzeitig die Vulkanisation der Lage aus nicht vulkanisiertem Kautschuk (103) und die Polymerisation / Retikulation und Härtung des duroplastischen Harzes der ersten Lage aus vorimprägniertem Gewebe (101) bewirkt.

2. Herstellungsverfahren einer Verbundwerkstoffkomponente gemäß Anspruch 1, **dadurch gekennzeichnet, dass** besagte Lage aus nicht vulkanisiertem Kautschuk (103) so geformt ist, dass sie innerhalb des Umfangs der ersten thermoplastischen Elastomerwerkstofffolie (102) bleibt.

3. Herstellungsverfahren einer Verbundwerkstoffkomponente gemäß Anspruch 1 oder 2, **dadurch gekennzeichnet, dass** es zusätzlich den Schritt des Platzierens / Legens einer zweiten Lage aus vorimprägniertem Gewebe (104) über die ersten Lage aus vorimprägniertem Gewebe (101) und unter die zweiten thermoplastischen Elastomerwerkstofffolie (106) umfasst, während der Bereich der Form (100), der dem Elastomerwerkstoffabschnitt (12, 13, 14, 15; 212, 213, 215; 312, 313, 314, 315; 412, 413, 414; 512, 513, 514; 612, 613; 712), der hergestellt werden soll, entspricht, unbedeckt bleibt.

4. Herstellungsverfahren einer Verbundwerkstoffkomponente gemäß Anspruch 3, **dadurch gekennzeichnet, dass** die Kante der zweiten Lage aus vorimprägniertem Gewebe (104) die Kante der Lage aus nicht vulkanisiertem Kautschuk (103) zumindest teilweise überlappt.

5. Herstellungsverfahren einer Verbundwerkstoffkomponente gemäß einem der vorhergehenden Ansprüche, **dadurch gekennzeichnet, dass** es zusätzlich den Schritt des Platzierens / Legens zumindest eines Stücks verstärkenden synthetischen Gewebes (105), das sich auch über die Lage aus nicht vulkanisiertem Kautschuk (103) erstreckt, über die erste Lage aus vorimprägniertem Gewebe (101) und unter die zweite thermoplastische Elastomerwerkstofffolie (106) umfasst.

6. Herstellungsverfahren einer Verbundwerkstoffkomponente gemäß Anspruch 5, **dadurch gekennzeichnet, dass** besagtes Stück verstärkendes synthetisches Gewebe (105) aus Aramidfasern und / oder Polyesterfasern hergestellt ist.

7. Herstellungsverfahren einer Verbundwerkstoffkomponente gemäß einem der vorhergehenden Ansprüche, **dadurch gekennzeichnet, dass** besagte erste Lage aus vorimprägniertem Gewebe (101) aus einem oder mehreren Stücken synthetischen Gewebes besteht, die geeignet miteinander überlappt und in ein vorzugsweise duroplastisches Epoxidharz eingebettet sind.

8. Herstellungsverfahren einer Verbundwerkstoffkomponente gemäß einem der vorhergehenden Ansprüche, **dadurch gekennzeichnet, dass** besagte erste (102) und / oder besagte zweite (106) thermoplastische Elastomerwerkstofffolie aus einem thermoplastischen Polyurethanpolymer (TPU) hergestellt ist / sind.

9. Herstellungsverfahren einer Verbundwerkstoffkomponente gemäß Anspruch 8, **dadurch gekennzeichnet, dass** besagtes thermoplastisches Polyurethanpolymer (TPU) ein thermoplastisches Polyurethanharz auf Etherbasis ist.

10. Herstellungsverfahren einer Verbundwerkstoffkomponente gemäß einem der vorhergehenden Ansprüche, **dadurch gekennzeichnet, dass** besagte Lage aus nicht vulkanisiertem Kautschuk (103) aus einem nicht vernetzten synthetischen Kautschuk mit einer Vulkanisierungstemperatur hergestellt ist, die im Wesentlichen gleich der Polymerisations- / Retikulationstemperatur des duroplastischen Harzes der ersten Lage aus vorimprägniertem Gewebe (101) ist; wobei vorzugsweise die Dicke der Lage aus nicht vulkanisiertem Kautschuk (103) ferner im Bereich zwischen 0,2 und 5 mm liegt.

11. Herstellungsverfahren einer Verbundwerkstoffkomponente gemäß Anspruch 10, **dadurch gekennzeichnet, dass** besagte Lage aus nicht vulkanisiertem Kautschuk (103) aus EPDM-Kautschuk hergestellt ist.

12. Schuh (1, 200, 300, 400, 500, 600), umfassend mindestens einen monolithischen Körper mit einer Schalenstruktur (10, 210, 310, 410, 510, 610, 710), die mindestens einen Verbundwerkstoffabschnitt (11, 211, 311, 411, 511, 611, 711) und mindestens einen Elastomerwerkstoffabschnitt (12, 13, 14, 15; 212, 213, 215; 312, 313, 314, 315; 412, 413, 414; 512, 513, 514; 612, 613; 712) aufweist, die zueinander benachbart sind; wobei besagter Schuh (1, 200, 300, 400, 500, 600) **dadurch gekennzeichnet ist, dass** besagter monolithischer Körper mit einer Schalenstruktur (10, 210, 310, 410, 510, 610, 710) gemäß einem der Ansprüche 1 bis 11 hergestellt ist.

13. Einlegesohle (700), umfassend mindestens einen monolithischen Körper mit einer Schalenstruktur (710), die mindestens einen Verbundwerkstoffabschnitt (711) und mindestens einen Elastomerwerkstoffabschnitt (712) aufweist, die zueinander benachbart sind;
wobei besagte Einlegesohle (700) **dadurch gekennzeichnet ist, dass** besagter monolithischer Körper mit einer Schalenstruktur (710) gemäß einem der Ansprüche 1 bis 11 hergestellt ist.

## Revendications

1. Procédé de fabrication d'un composant (10, 210, 310, 410, 510, 610, 710) d'une chaussure (1, 200, 300, 400, 500, 600, 700) en matériau composite; ledit composant étant un corps monolithique avec une structure en coque (10, 210, 310, 410, 510, 610, 710) qui a au moins une partie en matériau composite (11, 211, 311, 411, 511, 611, 711) et au moins une partie en matériau élastomère (12, 13, 14, 15 ; 212, 213, 215 ; 312, 313, 314, 315 ; 412, 413, 414 ; 512, 513, 514 ; 612, 613 ; 712) adjacentes l'une à l'autre; ladite au moins une partie en matériau composite (11, 211, 311, 411, 511, 611, 711) et ladite au moins une partie en matériau élastomère (12, 13, 14, 15 ; 212, 213, 215 ; 312, 313, 314, 315 ; 412, 413, 414 ; 512, 513, 514 ; 612, 613 ; 712) s'étendant sur toute l'épaisseur du corps monolithique avec une structure en coque (10, 210, 310, 410, 510, 610, 710) et étant reliés l'un à l'autre le long du bord et sans interruption ; ledit procédé de production étant **caractérisé en ce qu'**il comprend les étapes consistant à :
- poser/déposer au moins une première nappe de tissu pré-imprégné (101) sur la surface d'un moule (100) reproduisant en négatif la forme du corps monolithique à structure en coque (10, 210, 310, 410, 510, 610, 710) à réaliser, en laissant découverte la zone du moule (100) correspondant à la partie en matériau élastomère (12, 13, 14, 15 ; 212, 213, 215 ; 312, 313, 314, 315 ; 412, 413, 414 ; 512, 513, 514 ; 612, 613 ; 712) à produire;
- poser/déposer un premier film de matériau thermoplastique élastomère (102) sur la surface du moule (100), dans la zone du moule (100) correspondant à la partie en matériau élastomère (12, 13, 14, 15 ; 212, 213, 215 ; 312, 313, 314, 315 ; 412, 413, 414 ; 512, 513, 514 ; 612, 613 ; 712) à produire, faisant se chevaucher au moins partiellement le bord dudit premier film de matériau thermoplastique élastomère (102) à ladite première feuille de tissu pré-imprégné (101) ;
- poser/déposer une feuille de caoutchouc non vulcanisé (103) sur ledit premier film de matériau thermoplastique élastomère (102), dans la zone du moule (100) correspondant à la portion de matériau élastomère (12, 13, 14, 15 ; 212, 213, 215 ; 312, 313, 314, 315 ; 412, 413, 414 ; 512, 513, 514 ; 612, 613 ; 712) à produire ;
- poser/déposer un second film de matériau thermoplastique élastomère (106) sur ladite feuille de caoutchouc non vulcanisé (103), en faisant se chevaucher au moins partiellement le bord dudit second film de matériau thermoplastique élastomère (105) et ladite première nappe de tissu pré-imprégné (101) et/ou ledit premier film de matériau thermoplastique élastomère (102) ; et enfin
- extraire l'air du moule (100) puis soumettre le moule (100) et tout son contenu à un cycle de cuisson thermique qui provoque simultanément la vulcanisation de la feuille de caoutchouc non vulcanisé (103), et la polymérisation/réticulation et durcissement de la résine thermodurcissable de ladite première nappe de tissu pré-imprégné (101).

2. Procédé de fabrication d'un composant en matériau composite selon la revendication 1, **caractérisé en ce que** ladite feuille de caoutchouc non vulcanisé (103) est conformée pour rester à l'intérieur du périmètre dudit premier film en matériau thermoplastique élastomère (102).

3. Procédé de fabrication d'un composant en matériau composite selon la revendication 1 ou 2, **caractérisé en ce qu'**il comprend en outre l'étape consistant à poser/déposer, sur ladite première nappe de tissu pré-imprégné (101) et sous ledit deuxième film de matériau thermoplastique élastomère (106), une deuxième nappe de tissu pré-imprégné (104), en laissant découverte la zone du moule (100) correspondant à la partie en matériau élastomère (12, 13, 14, 15 ; 212, 213, 215 ; 312, 313 , 314, 315 ; 412, 413, 414 ; 512, 513, 514 ; 612, 613 ; 712) à produire.

4. Procédé de fabrication d'un composant en matériau composite selon la revendication 3, **caractérisé en ce que** le bord de ladite deuxième feuille de tissu pré-imprégné (104) recouvre au moins partiellement le bord de ladite feuille de caoutchouc non vulcanisé (103).

5. Procédé de fabrication d'un composant en matériau composite selon l'une quelconque des revendications précédentes, **caractérisé en ce qu'**il comprend en outre l'étape consistant à poser/déposer, sur ladite première nappe de tissu pré-imprégné (101) et sous ledit deuxième film de matériau thermoplastique élastomère (106), au moins une pièce de tissu synthétique de renfort (105), qui s'étend également sur la feuille de caoutchouc non vulcanisé (103).

6. Procédé de fabrication d'un composant en matériau composite selon la revendication 5, **caractérisé en ce que** ladite pièce de tissu synthétique de renfort (105) est en fibres d'aramide et/ou en fibres de polyester.

7. Procédé de fabrication d'un composant en matériau composite selon l'une quelconque des revendications précédentes, **caractérisé en ce que** ladite première nappe de tissu pré-imprégné (101) est constituée d'une ou plusieurs pièces de tissu synthétique convenablement superposées les unes aux autres et noyées dans une résine thermodurcissable, de préférence époxy.

8. Procédé de fabrication d'un composant en matériau composite selon l'une quelconque des revendications précédentes, **caractérisé en ce que** ledit premier (102) et/ou ledit deuxième (106) film de matériau thermoplastique élastomère est/sont en un polymère thermoplastique polyuréthane (TPU).

9. Procédé de fabrication d'un composant en matériau composite selon la revendication 8, **caractérisé en ce que** ledit polymère thermoplastique polyuréthane (TPU) est une résine thermoplastique polyuréthane à base d'éther.

10. Procédé de fabrication d'un composant en matériau composite selon l'une quelconque des revendications précédentes, **caractérisé en ce que** ladite feuille de caoutchouc non vulcanisé (103) est en un caoutchouc synthétique non réticulé de température de vulcanisation sensiblement égale à la température de polymérisation/réticulation de la résine thermodurcissable de ladite première nappe de tissu pré-imprégné (101) ; de préférence l'épaisseur de ladite feuille de caoutchouc non vulcanisé (103) étant en outre comprise entre 0,2 et 5 mm.

11. Procédé de fabrication d'une pièce en matériau composite selon la revendication 10, **caractérisé en ce que** ladite feuille de caoutchouc non vulcanisé (103) est en caoutchouc EPDM.

12. Chaussure (1, 200, 300, 400, 500, 600) comprenant au moins un corps monolithique avec une structure en coque (10, 210, 310, 410, 510, 610, 710), qui a au moins une partie en un matériau composite (11, 211, 311, 411, 511, 611, 711) et au moins une partie en matériau élastomère (12, 13, 14, 15 ; 212, 213, 215; 312, 313, 314, 315 ; 412, 413 , 414 ; 512, 513, 514 ; 612, 613 ; 712) adjacentes l'une à l'autre ; ladite chaussure (1, 200, 300, 400, 500, 600) étant **caractérisée en ce que** ledit corps monolithique à structure en coque (10, 210, 310, 410, 510, 610, 710) est fabriqué selon l'une quelconque des revendications 1 à 11.

13. Semelle intérieure (700) comprenant au moins un corps monolithique avec une structure en coque (710) ayant au moins une partie en matériau composite (711) et au moins une partie en matériau élastomère (712) adjacentes l'une à l'autre ; ladite semelle intérieure (700) étant **caractérisée en ce que** ledit corps monolithique à structure en coque (710) est fabriqué selon l'une quelconque des revendications 1 à 11.
